(19) Europäisches Patentamt
European Patent Office
Office européen des brevets

(11) **EP 0 475 110 B1**

(12) **EUROPÄISCHE PATENTSCHRIFT**

(45) Veröffentlichungstag und Bekanntmachung des Hinweises auf die Patenterteilung:
**16.12.1998 Patentblatt 1998/51**

(51) Int. Cl.⁶: **B32B 27/20**, B65D 65/40

(21) Anmeldenummer: **91113739.6**

(22) Anmeldetag: **16.08.1991**

(54) **Siegelbare, weisse Folie aus Polypropylenpolymeren mit guten mechanischen Eigenschaften**

Sealable white film of polypropylene polymers with good mechanical properties

Film thermoscellable blanc en polyproplylène avec des bonnes propriétés mécaniques

(84) Benannte Vertragsstaaten:
**BE DE ES FR GB IT**

(30) Priorität: **23.08.1990 DE 4026656**

(43) Veröffentlichungstag der Anmeldung:
**18.03.1992 Patentblatt 1992/12**

(73) Patentinhaber:
**Hoechst Trespaphan GmbH
66539 Neunkirchen (DE)**

(72) Erfinder:
• **Murschall, Ursula, Dr.
W-6505 Nierstein (DE)**
• **Peiffer, Herbert, Dr.
W-6500 Mainz-Finthen (DE)**
• **Schlögl, Gunter, Dr.
W-6233 Kelkheim (DE)**

(74) Vertreter:
**Luderschmidt, Schüler & Partner GbR
Patentanwälte,
Postfach 3929
65029 Wiesbaden (DE)**

(56) Entgegenhaltungen:
**EP-A- 0 244 614          DE-A- 2 646 965
DE-A- 3 817 909          GB-A- 1 047 539**

• **WORLD PATENTS INDEX LATEST 19. April 1983
Derwent Publications Ltd., London, GB; AN 84-
309746 & JP-59 193 936 (SUMITOMO
ARUMINIUMU SEIREN K.K.) 2. November 1984**

**Beschreibung**

Die Erfindung bezieht sich auf eine biaxial streckorientierte, weiße Folie mit einer Trägerschicht auf Basis von Propylenpolymeren, die Teilchen aus Titandioxid enthält und auf einer oder beiden Oberflächen mindestens eine Deckschicht aufweist.

Eine Folie dieser Art ist beispielsweise aus der EP-A-0 244 614 bekannt. Die Trägerschicht dieser Folie besteht aus einer Polymermischung von Polypropylen und Polystyrol und enthält 5 bis 15 Gew.-% pulverförmige Füllstoffe. Als geeignete Füllstoffe werden auch Mischungen aus Calciumcarbonat, Siliciumdioxid und Titandioxid eingesetzt. Die Teilchengröße liegt im Bereich von 2 bis 5 $\mu$m. Es ist auch Stand der Technik, Titandioxid-Pigmente mit einem Überzug aus Kieselsäure und Tonerde in thermoplastische Kunststoffe einzuarbeiten (DE-A-27 40 561). Die EP-B-0 044 515 gibt die Lehre, die mit den Oxiden von Aluminium, Zink, Titan, Zirconium und/oder Magnesium sowie einer organischen Substanz wie langkettige Fettsäuren, Alkohole oder Polydimethylsiloxan überzogenen $TiO_2$-Pigmente in Kunststoffüberzügen z.B. aus Polyethylen für Papier zu verwenden. Schließlich ist es aus der DE-A-26 46 965 bekannt, $TiO_2$-oder $CaCO_3$-Teilchen mit einem Überzug aus einem Fettsäureester als Füllstoff in thermoplastischen Kunstharzen, z.B. Polypropylen, einzusetzen. Es wurde ferner eine Polypropylenfolie beschrieben, die mit $SiO_2$ und $Al_2O_3$ überzogene $TiO_2$-Partikel enthält, welche gegebenenfalls mit einer polymeren organischen Siliciumverbindung oder einem Polyol beschichtet sind (DE-A-38 17 909).

Aufgabe der vorliegenden Erfindung war es nun, den Weißgrad und die mechanischen Eigenschaften von Folien der eingangs genannten Art zu verbessern. Die Folie sollte weiterhin gute Alterungseigenschaften aufweisen. Hierunter ist die Eigenschaft zu verstehen, daß die Polymeren unter Einwirkung von elektromagnetischer Strahlung, wie Licht und insbesondere UV-Strahlen, nur geringe Abbauerscheinungen oder Versprödung zeigen, die zu einer Verschlechterung der mechanischen Eigenschaften und Vergilbung der weißen Folie führen. Insbesondere ist die Neigung zur Vergilbung dann störend, wenn die weiße Folie zur werbewirksamen Umhüllung von Gegenständen, wie z.B. als Verpackungsfolie, Etikett oder als Kaschierfolie auf Karton, Pappe oder Papier eingesetzt wird. Ferner sollte die Folie eine gute Barriere gegenüber Licht und insbesondere UV-Strahlung bilden, so daß sie sich zur Verpackung strahlungsempfindlicher Güter, wie z.B. fetthaltiger Lebensmittel, besonders eignet. Eine weitere Aufgabe der Erfindung lag darin, ein wirtschaftliches Verfahren zur Herstellung dieser Folie bereitzustellen.

Diese Aufgabe wird gelöst durch die Folie mit den in Anspruch I genannten Merkmalen sowie durch das Verfahren nach Anspruch 8. Die abhängigen Ansprüche geben zweckmäßige Weiterbildungen der Folie bzw. des Verfahrens an.

Das Propylenpolymere der Träger- oder Basisschicht der Folie ist ein isotaktisches Homopolymerisat oder Copolymerisat des Propylens mit Ethylen oder Alpha-Olefinen mit 4 bis 8 C-Atomen oder eine Mischung aus Propylen-Homo- und Propylen-Copolymerisaten und/oder anderen Polyolefinen, insbesondere solchen mit 2 bis 6 C-Atomen, wobei die Mischung mindestens 50, insbesondere mindestens 75 Gew.-% Propylen-Homopolymerisat enthält. Das isotaktische Homopolymerisat hat zweckmäßigerweise einen n-heptanlöslichen Anteil von höchstens 15 Gew.-%. In den Copolymerisaten beträgt die Comonomermenge von Ethylen und den Alpha-Olefinen mit 4 bis 8 C-Atomen im allgemeinen maximal 10 Gew.-%, bezogen auf das Copolymerisat. Bevorzugte Comonomere sind Ethylen und Buten-(1). Geeignete Polyolefine in der Polymermischung sind HDPE, LDPE und LLDPE, wobei der Anteil dieser Polyolefine jeweils 15 Gew.-%, bezogen auf die Polymermischung, nicht übersteigt. Diese Polymeren der Basisschicht haben zweckmäßigerweise einen Schmelzflußindex im Bereich von 0,5 g/10 min bis 8 g/10 min bei 230 °C und 2,16 kp Belastung (DIN 53 735), insbesondere von 1,5 g/10 min bis 4 g/10 min.

Die Trägerschicht enthält Titandioxid-Teilchen. Die Titandioxidteilchen bestehen vorzugsweise überwiegend aus Rutil, welcher im Vergleich zu Anatas eine höhere Deckkraft zeigt. In bevorzugter Ausführungsform bestehen die Titandioxidteilchen zu mindestens 95 Gew.-% aus Rutil. Sie können nach einem üblichen Verfahren, z.B. nach dem Chlorid- oder dem Sulfat-Prozeß, hergestellt werden. Ihr Anteil beträgt 7 bis 12 Gew.-%, bezogen auf die Trägerschicht, die mittlere Teilchengröße ist relativ klein und liegt vorzugsweise bei 0,15 bis 0,30 Mikrometer.

Außerdem besitzen die Titandioxidteilchen einen Überzug aus anorganischen Oxiden, wie er üblicherweise als Überzug für $TiO_2$-Weißpigment in Papieren oder Anstrichmitteln zur Verbesserung der Lichtechtheit eingesetzt wird. $TiO_2$ ist bekanntlich photoaktiv. Bei Einwirkung von UV-Strahlen bilden sich freie Radikale auf der Oberfläche der Partikel. Diese freien Radikale können zu den filmbildenden Bestandteilen der Anstrichmittel wandern, was zu Abbaureaktionen und Vergilbung führt. Zu den besonders für den Überzug geeigneten Oxiden gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z.B. in der EP-A-0 044 515 und EP-A-0 078 633 beschrieben. Weiterhin enthält der Überzug organische Verbindungen mit polaren und unpolaren Gruppen. Die organischen Verbindungen müssen bei der Herstellung der Folie durch Extrusion der Polymerschmelze ausreichend thermostabil sein. Polare Gruppen sind beispielsweise -OH, -OR, -COOX, (X=R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z.B. Polydimethylsiloxan und Polymethylhydrogensiloxan.

EP 0 475 110 B1

Der Überzug auf den Titandioxid-Teilchen besteht gewöhnlich aus 1 bis 12, insbesondere 2 bis 6 g anorganischer Oxide und 0,5 bis 3, insbesondere 0,7 bis 1,5 g organischer Verbindung, bezogen auf 100 g Titandioxid-Teilchen. Der Überzug wird auf die Teilchen in wäßriger Suspension aufgebracht. Die anorganischen Oxide werden aus wasserlöslichen Verbindungen, z.B. Alkali-, insbesondere Natriumaluminat, Aluminiumhydroxid, Aluminiumsulfat, Aluminiumnitrat, Natriumsilikat (Wasserglas) oder Kieselsäure in der wäßrigen Suspension ausgefällt.

Unter anorganischen Oxiden wie $Al_2O_3$ und $SiO_2$ sind auch die Hydroxide oder deren verschiedene Entwässerungsstufen, wie z.B. Oxidhydrate, zu verstehen, ohne daß man deren genaue Zusammensetzung und Struktur kennt. Auf das $TiO_2$-Pigment werden nach dem Glühen und Mahlen in wäßriger Suspension die Oxidhydrate z.B. des Aluminiums und/oder Siliciums gefällt, die Pigmente dann gewaschen und getrocknet. Diese Ausfällung kann somit direkt in einer Suspension geschehen, wie sie im Herstellungsprozeß nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wäßriger Lösung (pH kleiner 4) eingesetzt und durch Zugabe von wäßriger Ammoniaklösung oder Natronlauge im pH-Bereich zwischen 5 und 9, vorzugsweise zwischen 7 und 8,5 das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe von Mineralsäure, wie Schwefelsäure, im pH-Bereich von 5 bis 8. Nach der Ausfallung der Metalloxide wird die Suspension noch 15 min bis etwa 2 h gerührt, wobei die ausgefällten Schichten eine Alterung erfahren. Das beschichtete Produkt wird von der wäßrigen Dispersion abgetrennt und nach dem Waschen bei erhöhter Temperatur, insbesondere bei 70 bis 110 °C, getrocknet.

Bevorzugt sollte die absolute Teilchengröße von Titandioxid 10 µm nicht übersteigen, da größere Teilchen die optischen Eigenschaften der Folie sowie die Verfahrenssicherheit bei der Herstellung der Folie verschlechtern.

Ein Gehalt an Titandioxid-Teilchen von 7 bis 12 %, bezogen auf die Trägerschicht (Basisschicht), ist für einen hohen Weißgrad ausreichend.

Die ein- oder beidseitig auf die Tragerschicht aufgebrachten Deckschichten können sowohl heiß- als auch kaltsiegelfähige Schichten sein. Diese Schichten können - bezogen auf die Basisschicht - ein- oder beidseitig vorliegen. Die beidseitigen Deckschichten können aus dem gleichen oder verschiedenen Materialien bestehen. Eine übliche Heißsiegelschicht hat einen Erweichungspunkt, der mindestens 10 °C niedriger als der Erweichungspunkt der Trägerschicht ist. Die Siegelschicht besteht vorzugsweise aus einem Ethylen-Homopolymerisat (Polyethylen hoher Dichte oder Polyethylen niedriger Dichte), einem LLDPE, einem Copolymerisat aus Propylen als Hauptkomponente und Ethylen, vorzugsweise mit einem Ethylen-Anteil von 4 bis 10 Gew.-% (bezogen auf das Copolymerisat), einem Copolymerisat aus Propylen als Hauptkomponente und Buten-(1), vorzugsweise mit einem Buten-Anteil von 10 bis 15 Gew.-% (bezogen auf das Copolymerisat), einem Terpolymerisat aus Propylen, Ethylen und einem Alpha-Olefin mit 4 bis 10 C-Atomen, vorzugsweise einem solchen aus 93,2 bis 99,0 Gew.-% Propylen, 0,5 bis 1,9 Gew.-% Ethylen und 0,5 bis 4,9 Gew.-% eines Alpha-Olefins mit 4 bis 10 C-Atomen oder aus einer Mischung aus zwei oder mehreren dieser Polymeren. Die Comonomeren sind in den Polymerisaten im wesentlichen statistisch verteilt.

Geeignete Kaltsiegelschichten bestehen aus Polymerisaten auf der Basis von natürlichem oder synthetischem Kautschuk. Geeignete äußere Deckschichten bestehen auch aus Acrylaten, wie sie in der EP-A-0 214 790, EP-A-0 254 417 und CH-PS 632 777 beschrieben sind, oder aus Vinylidenchlorid-Copolymerisaten, wie sie in der EP-A-0 088 535 genannt sind. Diese Verbindungen müssen mit einer haftvermittelnden Schicht auf der darunterliegenden Schicht aus Polyolefin verankert werden. Geeignete Primer sind ebenfalls in den genannten Schriften aufgeführt.

Bei Verwendung der Folie als Verpackungsmaterial ist der bzw. den Deckschichten zur Verbesserung der Gleitfähigkeit im Hinblick auf eine zufriedenstellende Maschinengängigkeit und im Hinblick auf ein reibungsloses Einfüllen des verpackten Packguts in Beute ein Gleitmittel zugefügt. Als Gleitmittel wird zweckmäßigerweise ein Polydialkylsiloxan, vorzugsweise mit 1 bis 4 C-Atomen in der Alkylgruppe, eingesetzt, wobei Polydimethylsiloxan besonders bevorzugt ist. Die Einsatzmenge des Polydialkylsiloxans in der Deckschicht bzw. den Deckschichten beträgt 0,2 bis 2,5 Gew.-%, vorzugsweise 0,5 bis 1,6 Gew.-%, bezogen auf das Gewicht der Deckschichten.

Die Gesamtdicke der Folie beträgt 20 bis 120, vorzugsweise 25 bis 60 µm, wobei die Dicke der Deckschicht(en) jeweils 0,2 bis 2, vorzugsweise 0,5 bis 1 µm beträgt.

Um bestimmte Eigenschaften der erfindungsgemäßen Folie noch weiter zu verbessern, können sowohl die Basisschicht als auch die Deckschicht(en) entsprechende Zusätze in einer jeweils wirksamen Menge enthalten, vorzugsweise seien Antistatika und Nukleierungsmittel (Keimbildner) genannt. Als Keimbildner können beispielsweise Dibenzylidensorbitol oder Natriumbenzoat und als Antistatika beispielsweise ethoxylierte Amine oder Fettsäureamide eingesetzt werden. Als positiv hat sich insbesondere der Zusatz von Verarbeitungsstabilisatoren zur Kernschicht erwiesen. Hierbei handelt es sich um Verbindungen, die den thermischen Abbau der Polymeren bei der Herstellung der Folie verhindern sollen. Zu diesen Verbindungen gehören Phosphitstabilisatoren und/oder Diphosphitstabilisatoren, wie z.B. Tris-(2,4-ditert.butylphenyl)phosphit und Bis-(2,4-ditert.butylphenyl)pentaerythrit-diphosphit in Mengen von 0,05 bis 0,3 Gew.-%, bezogen auf die Kernschicht. Als besonders vorteilhaft hat sich ferner der Zusatz eines optischem Aufhellers erwiesen, der in einer Menge von 100 bis 500, insbesondere 150 bis 250 ppm, bezogen auf die Kernschicht, eingesetzt wird. Insbesondere zur Verbesserung der Konfektionierbarkeit kann der Deckschicht bzw. den Deckschichten 0,1 bis 1 Gew.-% eines organischen oder anorganischen Antiblockmittels zugesetzt werden. Geeignete Antiblockmittel sind beispielsweise organische Polymerisate wie Polyamide, Polyester, Polycarbonate und dergleichen, die mit dem Polymer in der Deckschicht unverträglich sind und in Form von Partikeln vorliegen. Ebenso eignen sich anorganische Partikel, insbesondere Siliciumdioxid.

Die Folie wird durch Extrusion der Trägerschicht bzw. durch Coextrusion der die einzelnen Schichten bildenden schmelzflüssigen Polymermaterialien durch eine Flachdüse, Abschreckung und Verfestigung des Schmelzfilms, anschließendes biaxiales Streckorientieren in Längs- und Querrichtung und abschließendes Hitzefixieren hergestellt. Zum biaxialen Strecken wird die Folie erhitzt und zuerst in Längsrichtung und dann in Querrichtung gestreckt. Die Längsstreckung erfolgt beispielsweise bei 120 bis 130 °C im Verhältnis 5:1 bis 7:1 und die anschließende Querstrekkung bei 160 bis 170 °C im Verhältnis 8:1 bis 10:1, die Hitzefixierung bei 150 bis 160 °C etwa 0,5 bis 10 s lang. Die Oberflächen der Deckschichten können erforderlichenfalls nach der Hitzefixierung noch einer Oberflächenbehandlung, wie Corona- oder Flammbehandlung unterzogen werden, um der Folie für das Aufbringen weiterer Beschichtungen eine verbesserte Aufnahmefähigkeit zu verleihen und um die Verklebbarkeit bzw. Kaschierbarkeit oder Bedruckbarkeit zu verbessern.

Die Trägerschicht wird bevorzugt über Masterbatchtechnik erzeugt, d.h. entsprechend dem gewünschten Gehalt von Titandioxid-Teilchen werden Polypropylenrohstoff und Titandioxid-Masterbatch einem Extruder zur Bildung der Trägerschicht zugefügt. Unter dem Begriff Masterbatch ist bekanntlich eine Stammischung zu verstehen, insbesondere ein granulatförmiges staubfreies Konzentrat eines Kunststoffrohstoffes mit hohen Mengen Füllstoffen, das in der Masseaufbereitung als Zwischenprodukt verwendet wird, so als Zusatz zu füllstofffreiem Granulat vor dem Extrudieren, um daraus bestimmte Mengen an Füllstoff enthaltenden Formkörpern herzustellen. Das erfindungsgemäß für den Zusatz von $TiO_2$ eingesetzte Masterbatch zeichnet sich dadurch aus, daß es mehr als 30 Gew.-%, bevorzugt 40 bis 75 Gew.-%, bezogen auf das Gesamtgewicht aus Polymeren plus Füllstoffe, an $TiO_2$-Teilchen enthält und daß es als zylinder- oder linsenförmiges Granulat vorliegt. Als Trägerpolymer für das $TiO_2$-Masterbatch werden Polyolefine, olefinische Mischpolymerisate mit 2 bis 8 C-Atomen je Olefineinheit oder Mischungen aus diesen Verbindungen eingesetzt. Das bevorzugte Trägerpolymer ist Polypropylen, Polyethylen oder eine Mischung von Polypropylen und Polyethylen.

Das Schüttgewicht beider Masterbatche beträgt 700 bis 1 500 g/l, bevorzugt 950 bis 1 250 g/l. Die Bestimmung des Schüttgewichts erfolgt nach DIN 53 466. Das Verhältnis des Schüttgewichts des Polypropylenrohstoffs zum Schüttgewicht des Masterbatches ist kleiner als 0,80, bevorzugt kleiner als 0,65.

Die erfindungsgemäße Folie zeigt einen hohen Weißgrad, gute mechanische Eigenschaften und eine Dichte, die bei 0,9 bis 1,1, insbesondere 0,95 bis 1,05 g/cm$^3$ liegt.

Die erfindungsgemäße Folie eignet sich wegen ihrer vorteilhaften Eigenschaften, insbesondere wegen ihres hohen und dauerhaften Weißgrades als Verpackungsmaterial und auch für technische Zwecke, z.B. als Kaschierfolie, Etikettfolie oder als Klebebandträgerfolie.

Die Erfindung wird durch die nachfolgenden Beispiele näher erläutert.

Beispiel 1

Es wird eine Polypropylenfolie mit beidseitig vorhandenen heißsiegelbaren Oberflächenschichten aus einem statistischen Ethylen-Propylen-Copolymerisat ($C_2$-Gehalt 4,5 Gew.-%) [ABA-Folie] bei etwa 270 °C durch eine Flachdüse coextrudiert. Die Mischung (Schmelze) der Kernschicht der Folie besteht aus 91,0 Gew.-% Polypropylen und 8,5 Gew.-% $TiO_2$ (Rutil) mit einem mittleren Teilchendurchmesser von 0,2 μm, das eine anorganische Beschichtung aus $Al_2O_3$(4 g/100 g $TiO_2$) sowie eine organische Beschichtung aus Stearinsäure (1 g/100 g $TiO_2$) aufweist, wobei die Mischung der Kernschicht aus 84,5 Gew.-% Polypropylen und 15,5 Gew.-% eines Masterbatches aus 55 Gew.-Teilen beschichtetes $TiO_2$ und 45 Gew.-Teilen Polypropylen gebildet wird. Das jeweilige Schüttgewicht beträgt 530 g/l für Polypropylen und 750 g/l für das Masterbatch mit $TiO_2$.

Die Folie wird zunächst längs (Streckverhältnis 5 : 1) und dann quer (Streckverhältnis 10 : 1) verstreckt. Die biaxial orientierte Folie hat eine Foliendicke von 30 Mikrometer, wobei die Siegelschichten jeweils 0,8 Mikrometer dick sind. Die Foliendichte beträgt 0,98 g/cm$^3$.

Beispiel 2

Beispiel 1 wird wiederholt, die $TiO_2$-Teilchen sind in analoger Weise mit $Al_2O_3$ beschichtet. Anstelle von Stearinsäure wird Polydimethylsiloxan (1,5 g/100 g $TiO_2$) zur zusätzlichen Beschichtung der $TiO_2$-Teilchen verwendet.

Vergleichsbeispiel 1

Beispiel 1 wird wiederholt, die $TiO_2$-Teilchen sind in analoger Weise mit $Al_2O_3$(4 g/100 g $TiO_2$) sowie mit Stearin-

säure (1 g/100 g TiO$_2$) beschichtet. Die Kernschicht der Folie enthält zusätzlich 6 Gew.-% eines Masterbatches aus 70 Gew.-Tl. CaCO$_3$ und 30 Gew.-Tl. Polypropylen. Die Foliendichte beträgt 0,72 g/cm$^3$.

Vergleichsbeispiel 2

Vergleichsbeispiel 1 wird wiederholt, die TiO$_2$-Teilchen sind nur mit Al$_2$O$_3$(4 g/100 g TiO$_2$) beschichtet.

Vergleichsbeispiel 3

Beispiel 1 wird wiederholt, die TiO$_2$-Teilchen sind nur mit Al$_2$O$_3$ beschichtet (4 g/100 g TiO$_2$).

Vergleichsbeispiel 4

Beispiel 1 wird wiederholt, die TiO$_2$-Teilchen sind nur mit Stearinsäure beschichtet (1 g/100 g TiO$_2$).

Vergleichsbeispiel 5

Beispiel 1 wird wiederholt, die TiO$_2$-Teilchen bleiben unbeschichtet.

Der Weißgrad, die Vergilbungstendenz, der Elastizitätsmodul, die Reißfestigkeit und die Reißdehnung der erhaltenen Folie sind in der nachfolgenden Tabelle zusammengestellt.

Die Bestimmung des Weißgrades erfolgt mit Hilfe des elektrischen Remissionsphotometers "ELREPHO" der Firma Zeiss, Oberkochem (DE), Normlichtart C, 2° Normalbeobachter. Der Weißgrad wird als WG = RY + 3RZ - 3RX definiert.

WG = Weißgrad, RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Ein Folienmuster (Größe DIN A 4) wird in einer Vorrichtung vom Typ Suntest CPS der Firma Heraeus, Hanau (DE), mehrere Tage bestrahlt, Bestrahlungsstärke 765 W/m$^2$, und anschließend mit unbewaffnetem Auge mit einem nicht bestrahlten Muster verglichen.

Der Elastizitätsmodul, die Reißfestigkeit und die Reißdehnung werden nach DIN 53 457 bestimmt.

Aus der Tabelle ist klar zu ersehen, daß, sobald andere anorganische Teilchen in der Trägerfolie vorhanden sind, bzw. die TiO$_2$-Teilchen nicht oder allein mit einem organischen oder einem anorganischen Überzug versehen sind, entweder der Weißgrad oder die mechanischen Eigenschaften der Folie sich verschlechtern.

TABELLE

| | Weißgrad % | Vergilhungs-tendenz | E-Modul N/mm$^2$ | | Reißfestigkeit % | | Reißdehnung % | |
|---|---|---|---|---|---|---|---|---|
| | | | längs | quer | längs | quer | längs | quer |
| Beispiel 1 | 92 | sehr gering | 2300 | 4700 | 135 | 250 | 190 | 30 |
| Beispiel 2 | 91 | sehr gering | 2200 | 4700 | 130 | 240 | 100 | 30 |
| Vergleichsbeispiel 1 | 90 | sehr gering | < 1900 | < 3500 | 100 | 140 | 100 | 25 |
| Vergleichsbeispiel 2 | 78 | gering | < 1900 | < 3500 | 90 | 150 | 90 | 25 |
| Vergleichsbeispiel 3 | 79 | gering | 2300 | 4700 | 120 | 230 | 170 | 25 |
| Vergleichsbeispiel 4 | 75 | deutlich | 2400 | 4500 | 120 | 240 | 100 | 30 |
| Vergleichsbeispiel 5 | 74 | deutlich | 2200 | 4600 | 130 | 250 | 190 | 30 |

**Patentansprüche**

1. Biaxial streckorientierte, weiße Folie mit einer Trägerschicht auf Basis von Propylenpolymeren und ein- oder beidseitiger Deckschicht, dadurch gekennzeichnet, daß die Trägerschicht Teilchen aus Titandioxid enthält, wobei die Teilchen aus Titandioxid eine Beschichtung aus mindestens einem anorganischen Oxid und mindestens einer organischen Verbindung mit polaren und unpolaren Gruppen aufweisen.

2. Folie nach Anspruch 1, dadurch gekennzeichnet, daß der Anteil der Titandioxid-Teilchen 7 bis 12 Gew.-%, bezogen auf die Trägerschicht, beträgt.

3. Folie nach Anspruch 1 oder 2, dadurch gekennzeichnet, daß die mittlere Teilchengröße der Titandioxid-Teilchen 0,15 bis 0,3 μm beträgt.

4. Folie nach einem oder mehreren der Ansprüche 1 bis 3, dadurch gekennzeichnet, daß die Titandioxid-Teilchen überwiegend aus Rutil bestehen.

5. Folie nach einem oder mehreren der Ansprüche 1 bis 4, dadurch gekennzeichnet, daß die Titandioxid-Teilchen mit 1 bis 12, insbesondere 2 bis 6 g anorganischen Oxiden und 0,5 bis 3, insbesondere 0,7 bis 1,5g organischer Verbindungen, bezogen auf 100 g Titandioxid-Teilchen, beschichtet sind.

6. Folie nach einem oder mehreren der Ansprüche 1 bis 5, dadurch gekennzeichnet, daß die Titandioxid-Teilchen mit anorganischen Oxiden auf Basis von Aluminium, Silicium, Magnesium und/oder Zink und organischen Verbindungen aus der Gruppe der Fettalkohole, Fettsäuren und Polydiorganosiloxane, insbesondere Polyalkylhydrogensiloxane und/oder Polydialkylsiloxane, wobei die Alkylgruppen 1 bis 6, vorzugsweise 1 bis 3 C-Atome aufweisen, beschichtet sind.

7. Folie nach einem oder mehreren der Ansprüche 1 bis 6, dadurch gekennzeichnet, daß die Dichte der Folie bei 0,9 g/cm$^3$ bis 1,1 g/cm$^3$, insbesondere bei 0,95 g/cm$^3$ bis 1,05 g/cm$^3$ liegt.

8. Verfahren zur Herstellung der Folie nach einem oder mehreren der Ansprüche 1 bis 7, dadurch gekennzeichnet, daß man eine Mischung für die Trägerschicht, bestehend aus einem Granulat von Polypropylen, welches keine anorganischen Teilchen enthält, und einem Masterbatch, welches die beschichteten Titandioxid-Teilchen sowie Polypropylengranulat enthält, und die Polymermaterialien, welche die Deckschicht oder die Deckschichten bilden, coextrudiert und die erhaltene Folie durch Streckung in Längs- und Querrichtung orientiert und anschießend thermofixiert.

9. Verfahren nach Anspruch 8, dadurch gekennzeichnet, daß die Titandioxid-Teilchen in einem Masterbatch vorliegen, wobei der gesamte Anteil der Teilchen, bezogen auf die Mischung von Granulat aus Propylenpolymeren und Titandioxid-Teilchen, 40 bis 75 Gew.-% beträgt.

10. Verfahren nach Anspruch 8 oder 9, dadurch gekennzeichnet, daß das Schüttgewicht des Masterbatches 700 bis 1 500, insbesondere 950 bis 1,250 g/l (DIN 53 466) beträgt.

11. Verwendung der Folie nach einem oder mehreren der Ansprüche 1 bis 7 als Klebebandfolie, Verpackungsmaterial, Etikett oder Kaschierfolie.

**Claims**

1. A biaxially stretch-oriented white film with a substrate layer based on propylene polymers and a top layer on at least one or on both sides, characterised in that the substrate layer contains particles of titanium dioxide, the particles of titanium dioxide having a coating of at least one inorganic oxide and at least one organic compound with polar and non-polar groups.

2. A film according to claim 1, characterised in that the proportion of titanium oxide particles amounts to 7 to 12% by weight in relation to the substrate layer.

3. A film according to claim 1 or 2, characterised in that the mean particle size of the titanium dioxide particles amounts to 0.15 to 0.3 μm.

4. A film according to one or more of claims 1 to 3, characterised in that the titanium dioxide particles predominantly consist of rutile.

5. A film according to one or more of claims 1 to 4, characterised in that the titanium dioxide particles are coated with 1 to 12 and in particular 2 to 6 g inorganic oxides and 0.5 to 3 and in particular 0.7 to 1.5 g organic compounds based on 100 g titanium dioxide particles.

**6.** A film according to one or more of claims 1 to 5, characterised in that the titanium dioxide particles are coated with inorganic oxides based on aluminium, silicon, magnesium and/or zinc and organic compounds from the group of fatty alcohols, fatty acids and polydiorganosiloxanes, particularly polyalkyl hydrogen siloxanes and/or polydialkyl siloxanes, the alkyl groups comprising 1 to 6 and preferably 1 to 3 C-atoms.

**7.** A film according to one or more of claims 1 to 6, characterised in that the density of the film is around 0.9 g per cu.cm to 1.1 g per cu.cm. and in particular around 0.95 g per cu.cm. to 1.05 g per cu.cm.

**8.** A method of producing the film according to one or more of claims 1 to 7, characterised in that for the substrate layer, a mixture is coextruded which consists of a granulate of polypropylene which contains no inorganic particles, and a master batch which contains the coated titanium dioxide particles as well as polypropylene granulate, and the polymer materials which form the top layer or top layers, the film obtained being orientated by being stretched in a longitudinal and transverse direction, after which it is heat-set.

**9.** A method according to claim 8, characterised in that the titanium dioxide particles are present in a master batch, the total proportion of particles based on the mixture of granulate of propylene polymers and titanium dioxide particles amounting to 40 to 75% by weight.

**10.** A method according to claim 8 or 9, characterised in that the bulk weight of the master batch amounts to 700 to 1,500 and in particular 950 to 1,250 g/l (DIN 53 466).

**11.** Use of the film according to one or more of claims 1 to 7 as an adhesive strip film, packaging material, label or lining film.

## Revendications

**1.** Feuille blanche à orientation biaxiale obtenue par étirage, comprenant une couche de support à base de polymères de propylène et une couche de recouvrement sur une seule face ou sur les deux faces, caractérisée en ce que la couche de support contient des particules de dioxyde de titane, les particules de dioxyde de titane présentant une enduction constituée par au moins un oxyde inorganique et par au moins un composé organique contenant des groupes polaires et apolaires.

**2.** Feuille selon la revendication 1, caractérisée en ce que la fraction des particules de dioxyde de titane s'élève de 7 à 12% en poids rapportés à la couche de support.

**3.** Feuille selon la revendication 1 ou 2, caractérisée en ce que la granulométrie moyenne des particules de dioxyde de titane s'élève de 0,15 à 0,3 µm.

**4.** Feuille selon une ou plusieurs des revendications 1 à 3, caractérisée en ce que les particules de dioxyde de titane sont constituées principalement de rutile.

**5.** Feuille selon une ou plusieurs des revendications 1 à 4, caractérisée en ce que les particules de dioxyde de titane sont enduites, à concurrence de 1 à 12, en particulier de 2 à 6 g, avec des oxydes inorganiques et, à concurrence de 0,5 à 3, en particulier de 0,7 à 1,5 g, avec des composés organiques, rapportés à 100 g de particules de dioxyde de titane.

**6.** Feuille selon une ou plusieurs des revendications 1 à 5, caractérisée en ce que les particules de dioxyde de titane sont enduites avec des oxydes inorganiques à base d'aluminium, de silicium, de magnésium et/ou de zinc et avec des composés organiques choisis parmi le groupe comprenant des alcools gras, des acides gras et des polydiorganosiloxanes, en particulier des polyalkylhydrogénosiloxanes et/ou des polydialkylsiloxanes, les groupes alkyle présentant de 1 à 6, de préférence de 1 à 3 atomes de carbone.

**7.** Feuille selon une ou plusieurs des revendications 1 à 6, caractérisée en ce que la masse volumique des feuilles s'élève à une valeur de 0,9 g/cm$^3$ à 1,1 g/cm3, en particulier à une valeur de 0,95 g/cm$^3$ à 1,05 g/cm$^3$.

**8.** Procédé pour la préparation de la feuille selon une ou plusieurs des revendications 1 à 7, caractérisé en ce qu'on soumet à une coextrusion un mélange pour la couche de support constitué par un produit de granulation de polypropylène qui ne contient aucune particule inorganique et par un mélange-mère qui contient les particules de dioxyde de titane enduites, ainsi qu'un produit de granulation de polypropylène, et les matières polymères qui forment la couche de recouvrement ou les couches de recouvrement, et on soumet la feuille obtenue à une orientation par étirage en direction longitudinale et en direction transversale, puis on la soumet a un thermofixage.

9. Procédé selon la revendication 8, caractérisé en ce que les particules de dioxyde de titane sont présentes dans un mélange-mère, la fraction totale des particules, rapportée au mélange du produit de granulation de polymères de propylène et des particules de dioxyde de titane, s'élevant de 40 à 75% en poids.

10. Procédé selon la revendication 8 ou 9, caractérisé en ce que le poids volumique apparent du mélange-mère s'élève de 700 à 1500, en particulier de 950 à 1250 g/l (norme DIN 53 466).

11. Utilisation de la feuille selon une ou plusieurs des revendications 1 à 7 à titre de feuille pour ruban adhésif, à titre de matière d'emballage, à titre d'étiquette ou à titre de feuille de contrecollage.